# FASCICULE DE BREVET EUROPEEN

(11) **EP 2 024 900 B1**
(45) Date de publication et mention de la délivrance du brevet: **31.03.2010**
(21) Numéro de dépôt: 07725847.3
(22) Date de dépôt: 05.06.2007
(51) Int. Cl.: G06K 9/00

(54) **PROCEDE D'IDENTIFICATION D'UNE PERSONNE ET DISPOSITIF D'ACQUISITION**
VERFAHREN ZUM IDENTIFIZIEREN EINER PERSON UND BESCHAFFUNGSEINRICHTUNG
METHOD FOR IDENTIFYING A PERSON AND ACQUISITION DEVICE

(30) Priorité: 06.06.2006 FR 0604977
(43) Date de publication de la demande: 18.02.2009
(73) Titulaire: SAGEM Sécurité, 75015 Paris (FR)
(72) Inventeur: COTTARD, Martin, 75015 Paris (FR); FOURRE, Joël-Yann, 75015 Paris (FR); RIEUL, Francois, 75015 Paris (FR)
(74) Mandataire: Maillet, Alain
(86) Numéro de dépôt international: PCT/EP2007/004983
(87) Numéro de publication internationale: WO 2007/140988

(56) Documents cités:
- WO-A2-2004/090581
- US-A1- 2006 098 097
- DOWSKI E R ET AL: "WAVEFRONT CODING: A MODERN METHOD OF ACHIEVING HIGH PERFORMANCE AND/OR LOW COST IMAGING SYSTEMS" PROCEEDINGS OF THE SPIE, SPIE, BELLINGHAM, VA, US, vol. 3779, juillet 1999 (1999-07), pages 137-145, XP008038139 ISSN: 0277-786X

## Description

La présente invention concerne un dispositif d'acquisition de l'iris ou des iris d'une personne, ainsi qu'un procédé d'identification d'une personne mis en oeuvre avec un tel dispositif d'acquisition. Elle trouve application dans le domaine de la reconnaissance biométrique et en particulier dans le domaine de l'identification par analyse des iris des yeux.

L'identification par reconnaissance biométrique est utilisée pour sécuriser des installations comme par exemple des bâtiments ou des machines ou pour obtenir la délivrance de droits, comme par exemple, la délivrance d'une carte d'identité, le versement d'une pension,.... Cette technologie permet de s'affranchir de codes d'accès ou de cartes qui peuvent être volés ou falsifiés. L'utilisation de cette technologie permet de renforcer la sécurité dans la mesure où la probabilité que deux personnes aient deux biométries identiques est quasiment nulle.

On connaît un premier procédé d'identification d'une personne par analyse de son iris, qui est basé sur la transformation de l'image de l'iris en un modèle et sur la comparaison de ce modèle avec des modèles de référence stockés dans une base de données. Le modèle issu de la transformation est généré par un algorithme à partir de l'image de l'iris et contient un ensemble d'informations caractéristiques à l'image de l'iris. Comme pour les images d'iris, ces modèles sont uniques pour chaque personne.

Le premier procédé d'identification débute par une étape de capture d'une image de l'iris à l'aide d'un capteur de prise d'image. Le premier procédé d'identification se poursuit alors par une étape de transformation de l'image ainsi capturée en un modèle, puis par une étape de comparaison du modèle avec les modèles de référence de la base de données et, enfin, par une étape de prise de décision concernant l'identité de la personne à partir du résultat de l'étape de comparaison.

On connaît également un deuxième procédé d'identification prévu pour analyser les iris des deux yeux à partir d'une capture d'une image de chaque iris. A cette fin, soit le capteur de prise d'image utilisé pour le deuxième procédé d'identification est deux fois plus grand que celui utilisé pour le premier procédé d'identification, soit deux capteurs de prise d'image similaires à celui utilisé pour le premier procédé d'identification sont utilisés pour le deuxième procédé d'identification.

Le premier procédé d'identification comporte un autre désavantage qui réside dans la surface utile de l'image capturée. En effet, l'image capturée de l'iris se divise généralement en trois zones. La première zone est constituée de l'image de la paupière supérieure, la deuxième zone est constituée de l'image de la paupière inférieure et la troisième zone est constituée de l'image de la partie centrale de l'oeil, c'est-à-dire de l'iris proprement dit. Seule la troisième partie est effectivement exploitable dans le cadre d'un procédé d'identification par l'iris. La mise en place d'un capteur de prise d'image permettant une capture suffisamment large de la troisième zone entraîne un accroissement des dimensions du capteur et donc de son coût. En outre, l'accroissement des dimensions du capteur d'image entraîne également un accroissement, sur l'image capturée, de la première zone et de la deuxième zone, ce qui est inutile du fait que ces zones ne sont pas traitées lors du procédé d'identification. Les dimensions du capteur d'image sont alors inadaptées et le coût du capteur d'image est élevé par rapport à la surface de l'image capturée qui est utilisée au cours du procédé d'identification.

Dans les exemples de l'état de la technique décrit ci-dessus, le coût de mise en oeuvre du premier procédé d'identification ou du deuxième procédé d'identification est élevé et augmente lorsque la surface utile capturée augmente.

Un objet de la présente invention est de proposer un dispositif d'acquisition de l'iris ou des iris d'une personne qui ne présente pas les inconvénients de l'art antérieur.

A cet effet, est proposé un dispositif d'acquisition comprenant des moyens de capture prévus pour capturer une image de l'iris ou des iris d'une personne et étant tel qu'il comprend des moyens de déformation optique entre les moyens de capture et l'iris ou les iris qui sont prévus pour réaliser une transformation anamorphosique de l'iris ou des iris avant sa capture.

Avantageusement, les moyens de traitement sont prévus pour faire subir à l'image capturée une transformation anamorphosique inverse de celle générée par les moyens de déformation optique préalablement à la transformation en un ou deux modèles.

La transformation anamorphosique s'effectue selon un premier axe qui passe par les centres des deux iris de la personne et selon un deuxième axe perpendiculaire au premier axe.

Avantageusement, le coefficient de la transformation anamorphosique selon le premier axe est inférieur au coefficient de la transformation selon le deuxième axe.

Selon un mode de réalisation particulier, le dispositif d'acquisition comprend:
- des moyens de traitement prévus pour transformer ladite image en un ou deux modèles ;
- des moyens de stockage prévus pour stocker des modèles de référence ;
- des moyens de comparaison prévus pour comparer ledit modèle avec les modèles de référence ;
- des moyens de prise de décision prévus pour prendre une décision quant à l'identité de la personne à partir d'informations fournies par les moyens de comparaison.

L'invention propose également un procédé d'identification d'une personne par un dispositif d'acquisition selon une des variantes précédentes comprenant lorsque la personne est en vis-à-vis dudit dispositif d'acquisition :
- une étape de capture d'une image de l'iris ou des iris de la personne à travers les moyens de déformation optique;
- une étape de traitement de l'image ainsi capturée de manière à la coder sous forme d'un ou deux modèles ;
- une étape de comparaison du ou des modèles ainsi obtenus avec des modèles de référence contenus dans des moyens de stockage ; et
- une étape de prise de décision concernant l'identité de la personne à partir du résultat de l'étape de comparaison.

Avantageusement, au cours de l'étape de traitement et préalablement au codage de l'image, l'image capturée est traitée de manière à inverser les effets des moyens de déformation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un dispositif d'acquisition selon l'invention ;
la Fig. 2 représente un algorithme d'un procédé d'identification selon l'invention;
la Fig. 3 représente l'image d'un iris capturée par un dispositif d'acquisition de l'état de la technique;
la Fig. 4 représente l'image du même iris capturée par un dispositif d'acquisition selon l'invention; et
la Fig. 5 représente l'image d'un iris ayant subi une transformation anamorphosique inverse.

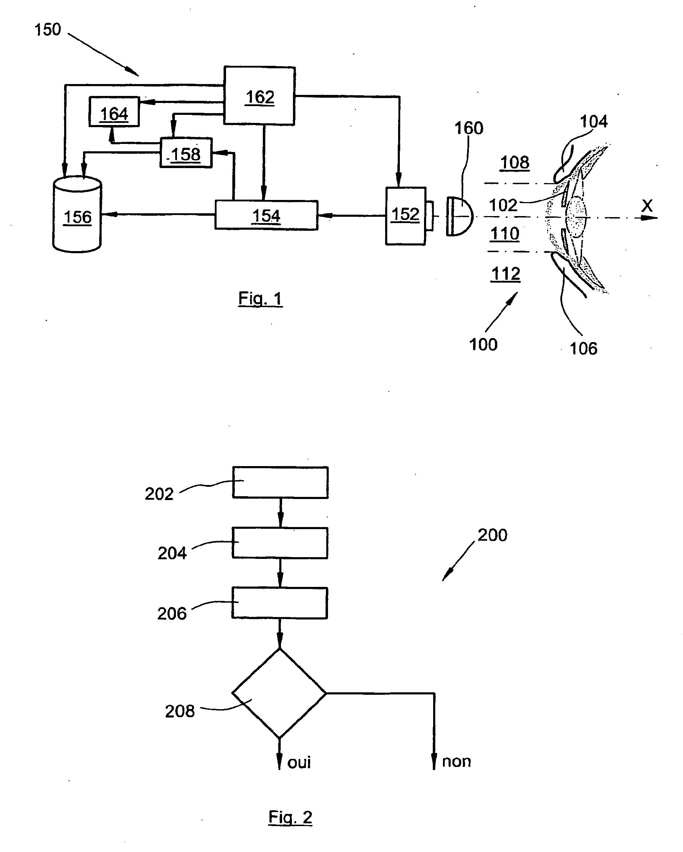

la Fig. 1 représente un dispositif d'acquisition 150 disposé en vis-à-vis de l'oeil 100 d'une personne dont l'iris 102 doit être identifié. A cette fin, le dispositif d'acquisition 150 comprend :
- des moyens de commande 162 ;
- des moyens de capture 152 ;
- des moyens de traitement 154 ;
- des moyens de comparaison 158 ;
- des moyens de prise de décision 164 ;
- des moyens de stockage 156 ; et
en amont des moyens de capture 152 sont disposés des moyens de déformation optique 160.

L'oeil 100 comprend une paupière supérieure 104 et une paupière inférieure 106. La zone où s'étend la paupière supérieure 104 définit une première zone 108 et la zone où s'étend la paupière inférieure 106 définit une deuxième zone 112. La zone où s'étend l'iris 102 définit une troisième zone 110 qui est donc disposée entre la première zone 108 et la deuxième zone 112.

Les moyens de capture 152 peuvent être du type CCD et sont prévus pour capturer une image de l'oeil 100 et en particulier de l'iris 102 ou des iris 102.

Les moyens de déformation optique 160 réalisent une transformation anamorphosique de l'image de l'oeil 100 et donc de l'iris 102 avant sa capture.

La transformation anamorphosique réalisée par les moyens de déformation optique 160 s'effectue selon un premier axe qui passe sensiblement par les centres des deux iris 102 de la personne, c'est-à-dire sensiblement horizontal, et selon un deuxième axe perpendiculaire au premier axe et qui se trouve dans un plan sensiblement vertical.

Les informations contenues dans les iris sont des informations orthoradiales, c'est-à-dire que les trames de l'iris 102 sont orientées sur les rayons de cet iris 102.

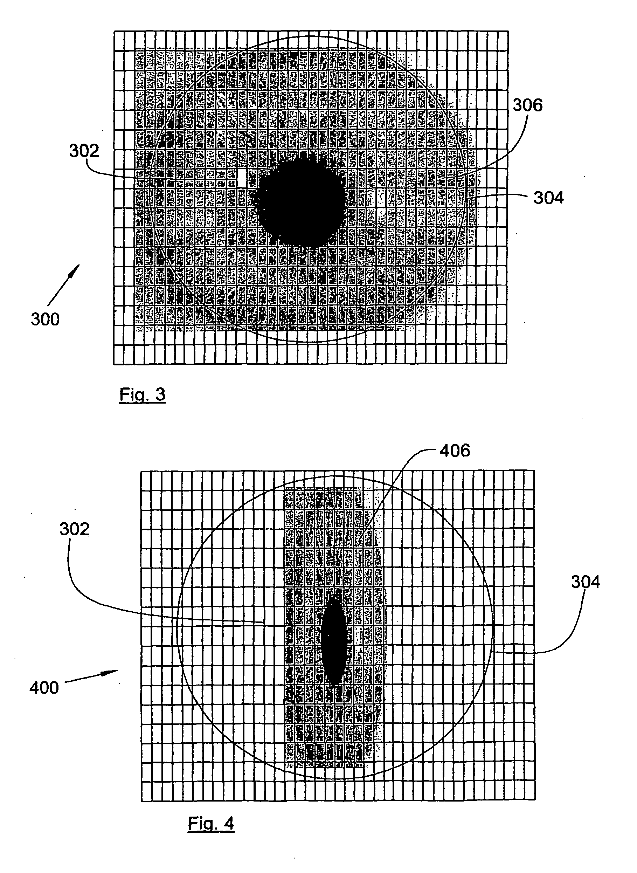

La Fig. 3 est une image 300 d'un iris vu à travers un dispositif d'acquisition de l'état de la technique. Les lignes 306 représentent les trames de l'iris qui portent l'information susceptible d'être utilisée dans le cadre d'une identification par l'iris. Le cercle 304 délimite la zone de détection du dispositif d'acquisition, c'est-à-dire que la zone à l'intérieur du cercle 304 est capturée et analysée pour vérifier l'identité de la personne. Les moyens de capture sont constitués d'une pluralité de mini-capteurs qui reçoivent chacun des informations provenant d'une surface sensiblement rectangulaire 302.

La Fig. 4 est une image 400 d'un iris vu à travers un dispositif d'acquisition 150 selon l'invention avec un coefficient de la transformation selon le premier axe qui est sensiblement de 1/3. Les lignes 406 représentent les trames de l'iris qui portent l'information. Le cercle 304 délimite la zone de détection du dispositif d'acquisition qui contient alors une plus grande partie de l'iris 102 par rapport à l'image de la Fig. 3. La mise en place d'un tel dispositif permet ainsi de prendre en compte une plus grande surface de l'iris 102 au cours du processus d'identification décrit ci-après même si à l'intérieur de chaque surface élémentaire 302 l'image est déformée. On observe alors une diminution de la résolution selon le premier axe.

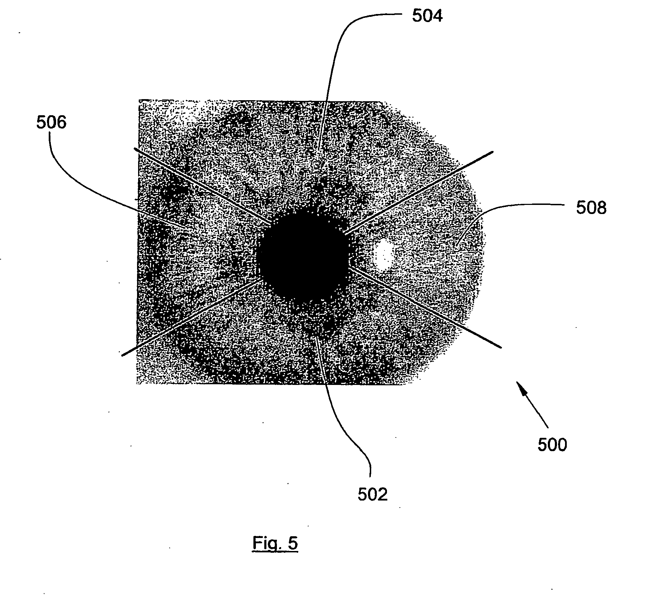

La transformation géométrique inverse consiste alors à rétablir la forme de l'iris 102. La Fig. 5 est une image 500 d'un iris ayant subi ladite transformation géométrique inverse. L'image 500 se décompose alors en quatre zones 502, 504, 506 et 508.

On remarque que les deux zones 502 et 504 qui se situent en partie centrale inférieure et supérieure de l'image 500 sont dégradées mais cela n'a pas de conséquence importante lors du processus d'identification car ces zones 502 et 504 sont généralement couvertes par les paupières et ne sont donc pas exploitables dans le cadre d'un procédé d'identification par l'iris.

On remarque que les deux zones 506 et 508 qui se situent en partie latérale gauche et droite de l'image 500 sont très peu dégradées par rapport à la même image 300 capturée dans le cas d'un dispositif de l'état de la technique. Ce qui permet d'avoir une bonne probabilité d'identification lors du processus d'identification car ces zones 506 et 508 sont les zones où les informations sont les plus facilement exploitables dans le cadre d'un procédé d'identification par l'iris.

Dans le cas d'une capture de l'image d'un iris 102, ce dispositif d'acquisition 150 permet d'augmenter la zone utile correspondant à l'iris 102 tout en conservant un capteur de prise d'image conforme à celui de l'état de la technique ou, même, en diminuant les dimensions du capteur de prise d'image. Ainsi, le coût de mise en oeuvre du procédé d'identification qui est décrit ci-dessous est diminué ou, au moins, conservé, mais la surface utile est alors augmentée par rapport à celui de l'état de la technique.

Dans le cas d'une capture de l'image des deux iris 102, ce dispositif d'acquisition 150 permet d'augmenter la zone de capture de manière à ce que la mise en place d'un capteur de prise de vue permette la capture des deux iris 102 et ceci sans que les dimensions du capteur de prise de vue ou que le nombre des capteurs de prise de vue double. Ainsi le coût de mise en oeuvre du procédé d'identification qui est décrit ci-dessous est diminué par rapport à celui de l'état de la technique.

Les moyens de déformation optique 160 peuvent prendre la forme de lentilles optiques du type lentilles cylindriques ou de miroirs courbes. Dans le cas d'un miroir, l'image de l'iris 102 ou des iris 102 se reflète dans le miroir avant d'être capturée par les moyens de capture 152.

Les moyens de commande 162 commandent les moyens de capture 152, les moyens de traitement 154, les moyens de comparaison 158, les moyens de prise de décision 164 et les moyens de stockage 156.

Les moyens de traitement 154 réalisent une transformation de l'image en un modèle dans le cas du traitement de l'image d'un iris 102, ou en deux modèles dans le cas du traitement de l'image de deux iris 102.

Selon un mode de réalisation particulier, les moyens de traitement 154 sont prévus pour faire subir à l'image capturée une transformation géométrique inverse de celle générée par les moyens de déformation optique 160 préalablement à la transformation en un ou deux modèles. L'image ainsi obtenue est alors conforme à l'image qui aurait pu être obtenue avec un dispositif d'acquisition plus grand, et le ou les modèles obtenus restent alors compatibles avec les bases de données déjà existantes. La transformation géométrique inverse est une transformation anamorphosique inverse. Selon un mode de réalisation particulier, la transformation inverse est du type zoom bilinéaire.

Dans le cas où la personne désire faire enregistrer le/les modèles ainsi obtenus, au cours d'une phase d'enregistrement, le/les modèles ainsi obtenus sont transférés vers les moyens de stockage 156 où ils constituent des modèles de référence. Les moyens de stockage 156 regroupent alors l'ensemble des modèles des personnes qui peuvent être identifiées par l'un des procédés d'identification décrits ci-après.

Dans le cas où la personne désire faire reconnaître son iris, le/les modèles ainsi obtenus sont transmis aux moyens de comparaison 158 qui comparent le/les modèles ainsi obtenus avec les modèles de référence enregistrés dans les moyens de stockage 156.

Les moyens de stockage 156 peuvent prendre la forme d'une base de données.

Les moyens de comparaison 158 transmettent alors les résultats des comparaisons aux moyens de prise de décision 164 qui, selon ces résultats, déterminent si l'iris 102 est identifié ou non. Les moyens de prise de décision 164 sont alors prévus pour prendre une décision quant à l'identité de la personne à partir d'informations fournies par les moyens de comparaison 158.

De préférence, les moyens de commande 162, les moyens de traitement 154, les moyens de comparaison 158 et les moyens de prise de décision 164 sont rassemblés dans une seule unité de calcul et sont réalisés par logiciel.

La Fig. 2 représente un algorithme d'un procédé d'identification 200 d'une personne par un dispositif d'acquisition 150 adapté à capturer l'image de l'iris 102 ou des iris 102 d'une personne. Le procédé d'identification 200 comprend ainsi, lorsque la personne est en vis-à-vis dudit dispositif d'acquisition 150 :
- une étape de capture 202 d'une image de l'iris 102 ou des iris 102 de la personne à travers les moyens de déformation optique 160 ;
- une étape de traitement 204 de l'image ainsi capturée de manière à la coder sous forme d'un ou deux modèles ;
- une étape de comparaison 206 du ou des modèles ainsi obtenus avec les modèles de référence contenus dans les moyens de stockage 156 ; et
- une étape de prise de décision 208 concernant l'identité de la personne à partir du résultat de l'étape de comparaison 206.

Selon un mode de réalisation particulier, au cours de l'étape de traitement 204 et préalablement au codage de l'image, l'image capturée est traitée de manière à inverser les effets des moyens de déformation 160.

L'étape de prise de décision 208 peut, par exemple, se baser sur des analyses de similitude entre les modèles à identifier et les modèles de référence des moyens de stockage 156. A chaque comparaison, un score représentatif de la similitude est donné, et selon que ce score est supérieur ou inférieur à une valeur de référence, la personne est considérée comme identifiée ou non.

De préférence, le coefficient de la transformation selon le premier axe est inférieur au coefficient de la transformation selon le deuxième axe.

Comme cela a été expliqué sur les Figs. 3 à 5, dans le cas d'une information orthoradiale, ce qui est le cas pour les informations contenues dans un iris, et des masques horizontaux (ce qui est le cas avec les paupières), l'anamorphose verticale (c'est-à-dire avec le coefficient de la transformation selon l'axe horizontal inférieur au coefficient de la transformation selon l'axe vertical) permet d'améliorer le rendement statistique global lors de l'acquisition, car on diminue la précision dans les zones le plus souvent masquées sans perdre trop d'informations dans les zones les plus exploitables.

Bien entendu, la présente invention n'est pas limitée aux exemples et modes de réalisation décrits et représentés, mais elle est susceptible de nombreuses variantes accessibles à l'homme de l'art.

## Revendications

1. Procédé d'identification (200) d'une personne, ledit procédé étant mis en oeuvre à l'aide d'un dispositif d'acquisition (150) et comprenant:
- une étape de capture (202) d'une image de l'iris (102) ou des iris (102) de la personne à travers des moyens de déformation optique (160) que comprend ledit dispositif d'acquisition (150) et qui sont prévus pour réaliser une transformation anamorphosique de l'image de l'iris (102) ou des iris (102) selon un premier axe qui passe par les centres des deux iris (102) de la personne et selon un deuxième axe perpendiculaire au premier axe,
- une étape de traitement (204) de l'image ainsi capturée de manière à la coder sous forme d'un ou deux modèles,
- une étape de comparaison (206) du ou des modèles ainsi obtenus avec des modèles de référence contenus dans des moyens de stockage (156), et
- une étape de prise de décision (208) concernant l'identité de la personne à partir du résultat de l'étape de comparaison (206).

2. Procédé d'identification (200) selon la revendication 1, **caractérisé en ce qu'**au cours de l'étape de traitement (204) et préalablement au codage de l'image, l'image capturée est traitée de manière à inverser les effets des moyens de déformation (160).

3. Dispositif d'acquisition (150) pour la mise en oeuvre d'un procédé d'identification selon l'une des revendications 1 ou 2 et comprenant:
- des moyens de capture (152) prévus pour capturer une image de l'iris (102) ou des iris (102) d'une personne,
- des moyens de traitement (154),
- des moyens de stockage (156),
- des moyens de comparaison (158),
- des moyens de prise de décision (164), et
étant **caractérisé en ce qu'**il comprend des moyens de déformation optique (160) entre les moyens de capture (152) et l'iris (102) ou les iris (102) qui sont prévus pour réaliser une transformation anamorphosique de l'image de l'iris (102) ou des iris (102) avant sa capture, la transformation anamorphosique s'effectuant selon un premier axe qui passe par les centres des deux iris (102) de la personne et selon un deuxième axe perpendiculaire au premier axe.

4. Dispositif d'acquisition (150) selon la revendication 3 spécialement prévu pour la mise en oeuvre du procédé d'identification de la revendication 2 et **caractérisé en ce que** les moyens de traitement (154) sont prévus pour faire subir à l'image capturée une transformation anamorphosique inverse de celle générée par les moyens de déformation optique (160).

5. Dispositif d'acquisition (150) selon l'une des revendications 3 ou 4, **caractérisé en ce que** le coefficient de la transformation anamorphosique selon le premier axe est inférieur au coefficient de la transformation selon le deuxième axe.

## Claims

1. Method of identification (200) of a person, the method being carried out using an acquisition device (150) and comprising:
- a step (202) of capturing an image of the iris (102) or irises (102) of the person through optical deformation means (160) belonging to said acquisition device (150) and which are provided in order to carry out an anamorphic conversion of the image of the iris (102) or irises (102) along a first axis which passes through the centres of the two irises (102) of the person and along a second axis perpendicular to the first axis,
- a step (204) of processing the image thus captured so as to code it in the form of one or two models,
- a step (206) of comparing the model or models thus obtained with reference models contained in storage means (156), and
- a step (208) of decision taking relating to the identity of the person based on the results of the comparison step (206).

2. Method of identification (200) according to claim 1, **characterised in that** during the processing step (204) and prior to the coding of the image, the image captured is processed so as to reverse the effects of the deformation means (160).

3. Acquisition device (150) for carrying out an identification process according to one of claims 1 or 2 and comprising:
- capturing means (152) provided for capturing an Image of the iris (102) or irises (102) of a person,
- processing means (154),
- storage means (156),
- comparison means (158),
- decision taking means (164), and
**characterised in that** it comprises optical deformation means (160) between the capturing means (152) and the Iris (102) or irises (102) which are provided in order to carry out an anamorphic conversion of the image of the iris (102) or of the Irises (102) before the capture thereof, the anamorphic conversion being carried out along a first axis which passes through the centres of the two irises (102) of the person and along a second axis which is perpendicular to the first axis.

4. Acquisition device (150) according to claim 3, specially provided for carrying out the identification process in claim 2 and **characterised in that** the processing means (154) are provided for subjecting the captured image to an anamorphic conversion which is the opposite of that produced by the optical deformation means (160).

5. Acquisition device (150) according to one of claims 3 or 4, **characterised in that** the coefficient of anamorphic conversion along the first axis is less than the coefficient of conversion along the second axis.

## Patentansprüche

1. Verfahren (200) zur Identifizierung einer Person, das mittels einer Erfassungsvorrichtung (150) durchgeführt wird und umfasst:
- einen Schritt (202) zum Erfassen des Bildes der Iris (102) bzw. beider Iris (102) einer Person über optische Verformungsmittel (160), die die Erfassungsvorrichtung (150) umfassen und vorgesehen sind, um eine anamorphotische Transformation des Bildes der Iris (102) bzw. beider Iris (102) längs einer ersten Achse durchzuführen, die durch die Mitten der beiden Iris (102) der Person verläuft, und längs einer zweiten, zur ersten Achse senkrechten Achse,
- einen Verarbeitungsschritt (204) des so erfassten Bildes derart, dass es in Form eines oder zweier Modelle kodiert wird,
- einen Vergleichsschritt (206) des oder der so erhaltenen Modelle mit Bezugsmodellen, die in Speichermitteln (156) enthalten sind, und
- einen Entscheidungsschritt (208), der die Identität der Person aufgrund des Vergleichsschrittes (206) betrifft.

2. Identifizierungsverfahren (200) nach Anspruch 1, **dadurch gekennzeichnet, dass** während des Verarbeitungsschrittes (204) und vor der Kodierung des Bildes das erfasste Bild derart behandelt wird, dass die Wirkungen der Verformungsmittel (160) umgekehrt werden.

3. Erfassungsvorrichtung (150) zur Durchführung des Identifizierungsverfahrens nach einem der Ansprüche 1 oder 2, umfassend:
- Erfassungsmittel (152) zum Erfassen eines Bildes der Iris (102) bzw. beider Iris (102) einer Person,
- Verarbeitungsmittel (154),
- Speichermittel (156),
- Vergleichsmittel (158),
- Entscheidungsmittel (164),
**gekennzeichnet durch** optische Verformungsmittel (160) zwischen den Erfassungsmitteln (152) und der Iris (102) bzw. beider Iris (102) zur Durchführung einer anamorphotischen Transformation des Bildes der Iris (102) bzw. beider Iris (102) vor seiner Erfassung, wobei die anamorphotische Transformation längs einer ersten Achse, die **durch** die Mitten der beiden Iris (102) der Person und längs einer zweiten Achse senkrecht zur ersten Achse verläuft, erfolgt.

4. Erfassungsvorrichtung (150) nach Anspruch 3 insbesondere zur Durchführung des Identifizierungsverfahrens nach Anspruch 2, **dadurch gekennzeichnet, dass** die Verarbeitungsmittel (154) vorgesehen sind, um das erfasste Bild einer anamorphotischen Transformation umgekehrt zu derjenigen zu unterwerfen, die durch die optischen Verformungsmittel (160) erzeugt wurde.

5. Erfassungsvorrichtung (150) nach einem der Ansprüche 3 oder 4, **dadurch gekennzeichnet, dass** der Koeffizient der anamorphotischen Transformation längs der ersten Achse niedriger als der Koeffizient der Transformation längs der zweiten Achse ist.
